Europäisches Patentamt

European Patent Office

Office européen des brevets

(19)

(11) Veröffentlichungsnummer: **0 090 162 B1**

(12) **EUROPÄISCHE PATENTSCHRIFT**

(45) Veröffentlichungstag der Patentschrift:
03.05.89

(51) Int. Cl.⁴: **G 06 F 11/16**

(21) Anmeldenummer: 83101408.9

(22) Anmeldetag: 14.02.83

(54) Zweikanaliges Fail-Safe-Mikrocomputerschaltwerk, insbesondere für Eisenbahnsicherungsanlagen.

(30) Priorität: 26.03.82 DE 3211265

(43) Veröffentlichungstag der Anmeldung:
05.10.83 Patentblatt 83/40

(45) Bekanntmachung des Hinweises auf die Patenterteilung:
03.05.89 Patentblatt 89/18

(84) Benannte Vertragsstaaten:
AT BE CH FR GB IT LI NL

(56) Entgegenhaltungen:
US-A- 4 096 990

ELEKTRONISCHE RECHENANLAGEN, Band 22, Nr. 5,
1980, Seiten 229-236, München, DE; H.-J. LOHMANN:
"Sicherkeit von Mikrocomputern für die
Eisenbahnsignaltechnik"

(73) Patentinhaber: Siemens Aktiengesellschaft Berlin und
München, Wittelsbacherplatz 2, D-8000 München 2 (DE)

(72) Erfinder: Strelow, Horst, Dipl.-Ing., Döhrenstrasse 9,
D-3302 Cremlingen 1 (DE)
Erfinder: Zeiler, Christoph, Ing.grad., Juliusstrasse 31F,
D-3300 Braunschweig (DE)

## Beschreibung

Die Erfindung bezieht sich auf ein zweikanaliges Fail-Safe-Mikrocomputerschaltwerk, insbesondere für Eisenbahnsicherungsanlagen, mit in zwei Kanälen dieselben Informationen verarbeitenden Mikrocomputern, deren Datenbusse über zwei Kopplungsschaltungen mit jedem zweier externer Datenbusse in Verbindung stehen, an die Eingangs- und Ausgangssignalumsetzer angeschlossen sind, die mit Hilfe von über einen Adreßbus des zugeordneten Mikrocomputers gegebenen Adressen selektiert und durch über Steuerleitungen des betreffenden Mikrocomputers gegebene Schreib- bzw. Lesesignale aktiviert werden können, wobei die beiden externen Datenbusse während der Eingabephasen so zeitlich gestaffelt aktiviert werden, daß die paarweise an den beiden externen Datenbussen vorhandenen Eingangssignalumsetzer bezüglich derselben Information nur nacheinander wirksam werden.

Bei einer Anzahl von technischen Prozessen, beispielsweise bei der Überwachung von Kernreaktoren oder bei der Steuerung von Eisenbahnanlagen, wird nach einem anerkannten sicherungstechnischen Prinzip gearbeitet, wodurch bei technischen Fehlern, mit denen beim Betrieb von nicht eigensicheren Datenverarbeitungsanlagen gerechnet werden muß, der zu steuernde Prozeß in einen für den Menschen und das Material unkritischen Zustand überführt wird. Dies kann dadurch erreicht werden, daß allen prozeßaktivierenden Signalen ein hoher signalpegel zugeordnet wird, der bei einer technischen Störung der Datenverarbeitungsanlage auf allen Ausgabekanälen abgeschaltet wird. Ein Mikrocomputersystem der eingangs genannten Art, welches der erläuterten Sicherheitsphilosophie genügt, ist beispielsweise in der Zeitschrift «Elektronische Rechenanlagen» 22. Jahrgang 1980, Heft 5, Seite 229 bis 236 und auch in der Siemens-Druckschrift F500/137 beschrieben.

Dieses bekannte Mikrocomputerschaltwerk ist aus zwei parallel dieselben Informationen verarbeitenden Mikrocomputern aufgebaut und wird so betrieben, daß nach einer festgestellten Ungleichheit beider Kanäle die Aktivitäten der Mikrocomputer direkt unterdrückt werden. Dies wird durch ein Zurückhalten der die beiden Mikroprozessoren treibenden Taktimpulse realisiert. Das zweikanalige Fail-Safe-Mikrocomputerschaltwerk erfüllt die Forderung nach einer kurzen Defekt-Offenbarungszeit zum einen dadurch, daß in ihm nach jedem Taktschritt die Zustände beider Computerzweige, also beider Kanäle, miteinander verglichen werden; zum anderen sorgen spezielle Prüfprogramme für eine kurze, vom Prozeßdatenfluß unabhängige Defektoffenbarung.

Dieses Mikrocomputerschaltwerk hat den Vorteil, daß es vollständig aus handelsüblichen Digitalbausteinen aufgebaut werden kann. Im Verhältnis zu bisherigen Rechnersystemen wird auch ein höheres Maß an Sicherheit erzielt, da die Zustandsgleichheit beider Einzelschaltwerke nach jedem Taktschritt geprüft wird. Für diese Prüfung wird im Gegensatz zu anderen Mehrrechnersystemen eine innere Computerschnittstelle verwendet. Auf ihr sind die Aktivitäten der Prozessoren und damit auch alle zum Prozeß hin eingeleiteten Aktivitäten am frühesten erkennbar. Da der gesamte Datenfluß der beiden Mikrocomputer über diese Schnittstelle läuft, unterliegen auch alle von außen zugeführten Informationen bereits vor ihrer Ablage in den Speichern jedes Mikrocomputers einem automatischen Vergleich. Voraussetzung ist natürlich eine taktsynchrone Dateneingabe in beide Mikrocomputer. Hierzu dienen die Koppelschaltungen des zweikanaligen Mikrocomputerschaltwerkes. Die taktsynchrone Verzweigung der einzugebenden Informationen auf beide interne Datenbusse erfolgt derart, daß beispielsweise zunächst eine Information vom externen ersten Datenbus über eine erste Koppelschaltung auf beide interne Datenbusse und dann dieselbe Information vom zweiten externen Datenbus über die zweite Koppelschaltung ebenfalls auf die beiden internen Datenbusse gegeben wird. Eine Aufteilung in einen internen und einen externen Datenbus je Kanal durch die jeweilige Koppelschaltung sowie die zeitlich gestaffelte Aktivierung der externen Datenbusse während der Eingabephasen, bei welchen die paarweise an den beiden externen Datenbussen vorhandenen Eingangssignalumsetzer bezüglich derselben Informationen nur nacheinander wirksam werden dürfen, erfordert bisher einen hohen Adreßdecodieraufwand.

Der Erfindung liegt somit die Aufgabe zugrunde, ein zweikanaliges Fail-Safe-Mikrocomputerschaltwerk der eingangs genannten Art so weiter zu bilden, daß eine steuerbare Trennung der internen von den externen Datenbussen mit Hilfe der Koppelschaltungen sowie eine zeitlich getrennte Belegung der externen Datenbusse während der Informationseingaben in das Mikrocomputerschaltwerk ermöglicht werden, und zwar ohne den bisherigen hohen Adreßdecodieraufwand.

Erfindungsgemäß wird die Aufgabe dadurch gelöst, daß in jedem der beiden Kanäle zwischen den Steuerleitungen und den Umsetzern eine Steuerschaltung vorgesehen ist, an die und die betreffende Koppelschaltung jeweils eine erste und eine zweite Adreßleitung des zugeordneten Adreßbusses angeschlossen sind in Verbindung mit einer kanalspezifischen Kennung, wobei die das Lesesignal führende Steuerleitung zusätzlich mit der Koppelschaltung des betreffenden Kanals verbunden ist, derart, daß je Kanal die externen von den internen Datenbussen und die Steuerschaltung von den Umsetzern bei dem einen Wert des über die erste Adreßleitung ausgegebenen Adreßbits abgeschaltet sind und bei dem anderen Wert dieses Adreßbits beim Vorliegen von Lesesignalen durch Äquivalenzverknüpfung des jeweiligen Werts des Adreßbits der zweiten Adreßleitung mit der kanalspezifischen Kennung eine abwechselnde Dateneingabe vom einen bzw. anderen externen Datenbus auf jeweils beide interne Datenbusse erfolgt.

Das erfindungsgemäße Mikrocomputerschaltwerk bietet infolge der unterschiedlichen adressengesteuerten Betriebsweisen der externen Datenbusse jeweils in Abhängigkeit von der Informationsrichtung auch die Ausgabe von Informationen gleichzeitig über beide externe Datenbusse. So ist es beispielsweise möglich, an die externen Datenbusse Zähler anzuschließen, die gleichzeitig programmgesteuert gestartet werden können.

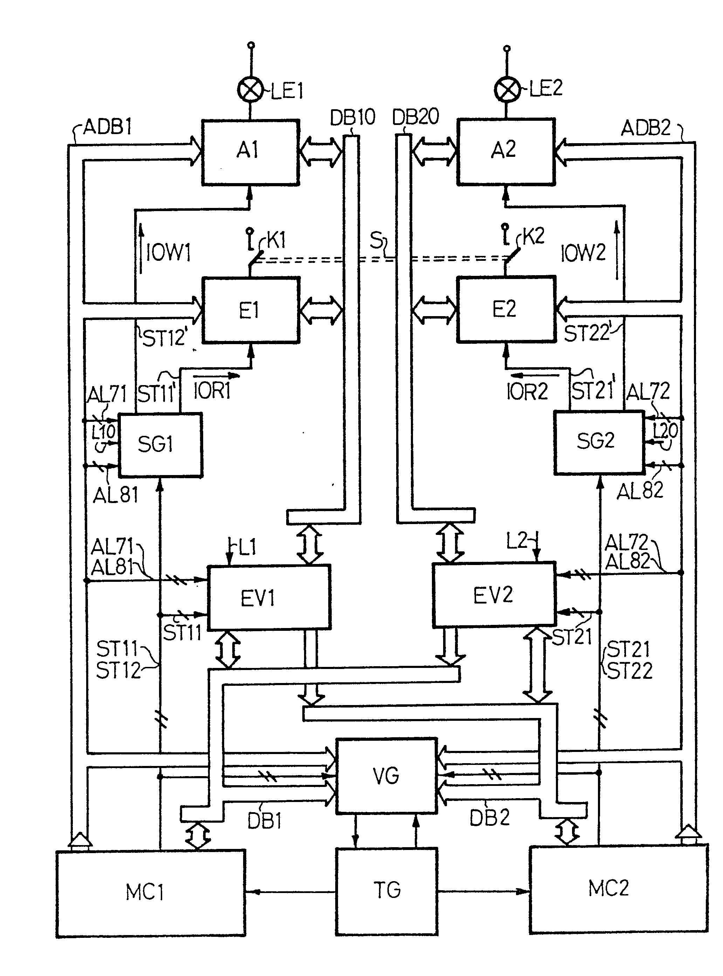

Ein Ausführungsbeispiel der Erfindung ist in der Zeichnung dargestellt und wird nachfolgend näher erläutert.

Die Darstellung zeigt im Blockschaltbild ein zweikanaliges Fail-Safe-Mikrocomputerschaltwerk, dessen wesentliche Baugruppen zwei Mikrocomputer MC1 und MC2 sind. Beiden gemeinsam zugeordnet ist eine Taktstromversorgung TG mit integriertem Abschaltteil, der mit einer Anzahl von Vergleichern, die lediglich durch ein Rechtecksymbol VG dargestellt sind, derart zusammenarbeitet, daß bei einer ausfallbedingten Fehlfunktion innerhalb des gesamten Mikrocomputerschaltwerkes die Taktstromversorgung abgeschaltet wird. Dies hat zur Folge, daß keine den Prozeß aktivierende Signale abgegeben werden, so daß für den Menschen und das Material keine Gefährdung eintritt. Da beispielsweise Stellglieder über spezielle Wechselstromausgangssignalumsetzer (nicht dargestellt) angesteuert werden, unterbleibt im festgestellten Fehlerfall grundsätzlich deren Ansteuerung. So werden Fehlsteuerungen dieser Stellglieder sicher verhindert. In Verbindung mit jedem der Mikrocomputer MC1 bzw. MC2, die praktisch je für sich in Verbindung mit noch zu beschreibenden weiteren Baugruppen einen kompletten Verarbeitungskanal darstellen, sind ein Adreßbuch ADB1 bzw. ADB2, interne Datenbusse DB1 bzw. DB2 sowie je Kanal zwei Steuerleitungen ST11, ST12 und ST21, ST22 vorgesehen. Die internen Datenbusse DB1 und DB2, die Adreßbusse ADB1 und ADB2 sowie die beiden Steuerleitungspaare ST11, ST12 und ST21, ST22 sind auf die Vergleicher VG geführt, derart, daß fortlaufend ein Vergleich sämtlicher Daten beider Verarbeitungskanäle möglich ist und im Fehlerfall der beschriebene Abschaltvorgang durch den Abschaltteil der Taktstromversorgung TG erfolgt. Zwischen den beiden internen Datenbussen DB1 und DB2 und zwei entsprechenden externen Datenbussen DB10 und DB20 sind zwei Koppelschaltungen EV1 und EV2 vorgesehen. Die Koppelschaltung EV1 hat die Aufgabe, die zu bestimmten Zeiten auf dem externen Datenbus DB10 vorhandenen Informationen auf die beiden internen Datenbusse DB1 und DB2 und damit in die Mikrocomputer MC1 und MC2 zu übertragen. Entsprechendes gilt sinngemäß für die Koppelschaltung EV2 zur anschließenden Übertragung der gleichen Informationen, jedoch vom externen Datenbus DB20, ebenfalls über die beiden internen Datenbusse DB1 und DB2 in die Mikrocomputer MC1 und MC2. Die Informationsausgabe auf die beiden externen Datenbusse DB10 und DB20 erfolgt über die Koppelschaltungen EV1 und EV2 gleichzeitig. In einem anderen Betriebsfall sind die Koppelschaltungen EV1 und EV2 abgeschaltet, und zwar an den Ein- und Ausgängen hochohmig geschaltet, so daß eine exakte Trennung zwischen internen und externen Datenbussen DB1 und DB10 bzw. DB2 und DB20 gewährleistet ist.

Zu Steuerzwecken ist die Koppelschaltung EV1 bzw. EV2 mit der Steuerleitung ST11 bzw. ST21 verbunden. Zu gegebener Zeit wird über die Steuerleitungen ST11 und ST21 gleichzeitig je ein Lesesignal IOR1 bzw. IOR2 geleitet. Weiterhin erhält jede der beiden Koppelschaltungen EV1 bzw. EV2 über eine Leitung L1 bzw. L2 ständig eine kanalspezifische Kennung, die beispielsweise im Falle der Leitung L1 aus tiefem Potential «L» und bei der Leitung L2 aus hohem Potential «H» bestehen kann. Ferner ist die Koppelschaltung EV1 bzw. EV2 mit zwei Adreßleitungen AL71, AL81 bzw. AL72, AL82 des Adreßbusses ADB1 bzw. ADB2 verbunden. Über die genannten Leitungen werden, ausgelöst durch die Mikrocomputer MC1 und MC2, der eine oder andere Wert der Adreßbits $2^7$ und $2^8$ übertragen.

Stellvertretend für eine Vielzahl von Eingangssignalumsetzern ist pro Kanal jeweils ein einziger dargestellt und mit E1 bzw. E2 bezeichnet. Diese Eingangssignalumsetzer E1 und E2 sind jeweils mit dem zugehörigen Adreßbus ADB1 bzw. ADB2 und dem externen Datenbus DB10 bzw. DB20 verbunden und können somit per Adresse angewählt werden. Die Adreßleitungen AL71, AL81 bzw. AL72 und AL82 brauchen, da deren Informationen anderweitig zu Steuerzwecken verwendet sind, nicht unbedingt mit an die Eingangssignalumsetzer E1 und E2 angeschlossen zu werden. Die beiden dargestellten Eingangssignalumsetzer E1 und E2 sind dafür vorgesehen, die Lage zweier Kontakte K1 und K2 zu melden. Die gestrichelte Doppellinie S soll dabei andeuten, daß es sich beispielsweise um zwangsgeführte Kontakte K1, K2 eines einzigen Relais (nicht dargestellt) handelt. Zu Steuerzwecken erhalten die Eingangssignalumsetzer E1 und E2 schließlich noch das bereits erwähnte Lesesignal IOR1 bzw. IOR2, das jeweils mittelbar über die Steuerleitung ST11' bzw. ST21' zugeführt wird.

Zu Ausgabezwecken ist pro Kanal an den externen Datenbus DB10 bzw. DB20 je ein Ausgangssignalumsetzer A1 bzw. A2 angeschlossen, der bei einem entsprechenden Auswahlkriterium über den Adreßbus ADB1 bzw. ADB2 und gleichzeitig vorhandenem, ebenfalls mittelbar über die Steuerleitung ST12' bzw. ST22' zugeführten Schreibsignal IOW1 bzw. IOW2 eine Lampe LE1 bzw. LE2 anschaltet. Wie bei den Eingangssignalumsetzern E1 und E2 brauchen auch bei den Ausgangssignalumsetzern zwei Adreßleitungen AL71, AL81 bzw. AL72, AL82 nicht mit den Ausgangssignalumsetzern verbunden zu werden, da die Informationen dieser Adreßleitungen andere Aufgaben – wie nachfolgend noch näher erläutert wird – erfüllen.

In der Praxis ist natürlich an jeden der externen Datenbusse DB10 bzw. DB20 eine weitaus höhere Anzahl von Eingangs- und Ausgangssignalumsetzern angeschlossen. Für bestimmte Informationsausgaben ist es nicht unbedingt erforderlich, den dafür notwendigen Ausgangssignalumsetzer zweikanalig vorzusehen wie beim Ausführungsbeispiel. In dem Fall reicht auch ein einziger Ausgangssignalumsetzer, der entweder am externen Datenbus DB10 oder am anderen externen Datenbus DB20 angeschlossen ist.

Wesentlich ist nun für das erfindungsgemäße Fail-Safe-Mikrocomputerschaltwerk, daß die Steuerleitungen ST11, ST12 bzw. ST21 und ST22 zum Übertragen des Lesesignals IOR1 bzw. IOR2 oder des Schreibsignals IOW1 bzw. IOW2 auf die an die externen Datenbusse DB10 und DB20 angeschlossenen Eingangs- und Ausgangssignalumsetzer über jeweils eine pro Kanal vorgesehene Steuerschaltung SG1 bzw. SG2 geführt sind. Wie die Koppelschaltung EV1 bzw. EV2 ist die Steuerschaltung SG1 bzw. SG2 mit den Adreßleitungen AL71 und AL81 bzw. AL72 und AL82 verbunden. Außerdem erhält die Steuerschaltung SG1 bzw. SG2 über die Leitung L10 bzw. L20 dieselbe kanalspezifische Kennung wie die Koppelschaltung EV1 bzw. EV2 über die Leitung L1 bzw. L2. Die Steuerschaltungen SG1 und SG2 können jeweils aus zwei handelsüblichen Treiberbausteinen mit Tristateausgang aufgebaut sein, wobei diese beiden Treiberbausteine eingangsseitig mit den Steuerleitungen ST11 und ST12 bzw. ST21 und ST22 verbunden sind. Der eine Treiberbaustein zum Durchschalten des Schreibsignals IOW1 bzw. IOW2 wird steuerseitig mit der Adreßleitung AL71 bzw. AL72 verbunden, derart, daß beim Vorhandensein des Wertes «H» des Adreßbits $2^7$ auf der Adreßleitung AL71 bzw. AL72 die Steuerleitung ST12 bzw. ST22 durchgeschaltet ist. Durch diese Gestaltung der Steuerschaltungen SG1 und SG2 wird erreicht, daß bei allen über den Adreßbus ADB1 bzw. ADB2 übertragenen Adressen, in denen die Adreßleitung AL71 bzw. AL72 hohen Signalpegel «H» führt, Ausgangssignalumsetzer, im Beispiel die Ausgangssignalumsetzer A1 und A2, gleichzeitig per Adresse aktiviert werden können. Bei allen anderen Adressen, bei denen die Adreßleitungen AL71 und AL72 tiefes Potential «L» führen, sind die Steuerschaltungen SG1 und SG2 gesperrt, so daß sich diese Adressen ausschließlich auf eine «innere» Datenverarbeitung bei den beiden Mikrocomputern MC1 und MC2 und deren periphere Einrichtungen (nicht dargestellt) auswirken.

Der zweite Treiberbaustein jeder Steuerschaltung SG1 bzw. SG2 zum Schalten des jeweils über die Steuerleitung ST11 bzw. ST21 zugeführten Lesesignals IOR1 bzw. IOR2 erhält seine Steuerinformation über ein UND-Glied, an welches einerseits die bei Steuerschaltung SG1 die Adreßleitung AL71 und in der anderen Steuerschaltung SG2 die Adreßleitung AL72 angeschlossen ist. Die Adreßleitung AL81 bzw. AL82 wird zusammen mit der Leitung L10 bzw. L20 an ein Äquivalenzglied angeschlossen, das ausgangsseitig mit dem jeweiligen UND-Glied verbunden ist. Durch eine derartige Verknüpfung in der Steuerschaltung SG1 bzw. SG2 wird hinsichtlich des Durchschaltens der angeschlossenen Steuerleitung ST11 bzw. ST21 bezüglich des Lesesignals IOR1 bzw. IOR2 erreicht, daß unter der Voraussetzung von hohem Potential «H» auf der Adreßleitung AL71 bzw. AL72 das Lesesignal IOR1 oder das Lesesignal IOR2 in Abhängigkeit vom Wert «L» oder «H» des Adreßbits $2^8$ auf der Leitung AL81 bzw. AL82 für den Eingangssignalumsetzer E1 oder den Eingangssignalumsetzer E2 zur Verfügung steht. Die beiden Werte «L» und «H» des Adreßbits $2^8$ erscheinen für die Informationseingabe abwechselnd nacheinander auf den Adreßleitungen AL81 und AL82.

Da die Koppelschaltung EV1 bzw. EV2 ebenfalls mit den Adreßleitungen AL71, AL81 bzw. AL72 und AL82 verbunden sind und jeweils über die Steuerleitung ST11 bzw. ST21 das Lesesignal IOR1 bzw. IOR2 unmittelbar erhalten, wird durch eine entsprechende Verknüpfung dieser Größen bezüglich der angeschlossenen Datenbusse erreicht, daß beim Wert «H» des Adreßbits $2^7$ auf der Adreßleitung AL71 bzw. AL72 und vorhandenem Lesesignal IOR1 bzw. IOR2 auf der Steuerleitung St11 bzw. ST21 beim einen Wert «L» bzw. «H» des auf der Adreßleitung AL81 bzw. auf der anderen Adreßleitung AL82 vorhandenen Adreßbits $2^8$ eine Eingabe vom externen Datenbus DB10 über die Koppelschaltung EV1 auf die internen Datenbusse DB1 und DB2 und nachfolgend beim anderen Wert «H» bzw. «L» des auf der Adreßleitung AL81 bzw. AL82 vorhandenen Adreßbits $2^8$ eine Eingabe vom externen Datenbus DB20 über die Koppelschaltung EV2 auf die beiden internen Datenbusse DB1 und DB2 erfolgt. Die Koppelschaltungen EV1 und EV2 können ebenfalls Treiberbausteine mit Tristateausgang enthalten, die jeweils beim Wert «L» des Adreßbits $2^7$ auf der Adreßleitung AL71 bzw. AL72 hochohmig sind.

Die Ansteuerung der Treiberbausteine in den Eingabeverdopplern EV1 und EV2 erfolgt zur Datenausgabe so, daß beim Wert «H» des Adreßbits $2^7$ auf den Adreßleitungen AL71 und AL72 und fehlenden Lesesignalen – jedoch vorhandenen Schreibsignalen IOW1, IOW2 auf den Steuerleitungen ST12′, ST22′ – der interne Datenbus DB1 bzw. DB2 mit dem externen Datenbus DB10 bzw. DB20 verbunden ist. Diese logische Verknüpfung erfolgt ebenfalls über handelsübliche Schaltglieder der Digitaltechnik.

**Patentanspruch**

1. Zweikanaliges Fail-Safe-Mikrocomputerschaltwerk, insbesondere für Eisenbahnsicherungsanlagen, mit in zwei Kanälen dieselben Informationen verarbeitenden Mikrocomputern (MC1, MC2), deren Datenbusse (DB1, DB2) über zwei Koppelschaltungen (EV1, EV2) mit jedem zweier externer Datenbusse (DB10, DB20) in Verbindung stehen, an die Eingangs- (E1, E2) und Ausgangssignalumsetzer (A1, A2) angeschlossen sind, die mit Hilfe von über einen Adreßbus (ADB1, ADB2) des zugeordneten Mikrocomputers gegebenen Adressen selektiert und durch über Steuerleitungen (ST11, ST12, ST21, ST22) des betreffenden Mikrocomputers gegebene Lese- bzw. Schreibsignale (IOR1, IOR2, IOW1, IOW2) aktiviert werden können, wobei die beiden externen Datenbusse (DB10, DB20) während der Eingabephasen so zeitlich gestaffelt aktiviert werden, daß die paarweise an den beiden externen Datenbussen vorhandenen Eingangssignalumsetzer (E1, E2) bezüglich derselben Information nur nacheinander wirksam werden, dadurch gekennzeichnet, daß in jedem der beiden Kanäle zwischen den Steuerleitungen (ST11, ST12 bzw. ST21, ST22) und den Umsetzern (E1, A1 bzw. E2, A2) eine Steuerschaltung (SG1, SG2) vorgesehen ist, an die und die betreffende Koppelschaltung (EV1 bzw. EV2) jeweils eine erste und eine zweite Adreßleitung (AL71, AL81 bzw. AL72, AL82) des zugeordneten Adreßbusses (ADB1 bzw. ADB2) angeschlossen sind, in Verbindung mit einer kanalspezifischen Kennung, («L», «H») wobei die das Lesesignal (IOR1 bzw. IOR2) führende Steuerleitung (ST11 bzw. ST21) zusätzlich mit der Koppelschaltung (EV1 bzw. EV2) des betreffenden Kanals verbunden ist, derart, daß je Kanal die externen von den internen Datenbussen (DB10/DB1; DB20/DB2) und die Steuerschaltung von den Umsetzern (SG1/E1, A1; SG2/E2, A2) bei dem einen Wert («L») des über die erste Adreßleitung (AL71 bzw. AL72) ausgegebenen Adreßbits ($2^7$) abgeschaltet sind und bei dem anderen Wert («H») dieses Adreßbits ($2^7$) beim Vorliegen von Lesesignalen (IOR1 bzw. IOR2) durch Äquivalenzverknüpfung des jeweiligen Werts («L», «H») des Adreßbits ($2^8$) der zweiten Adreßleitung (AL81 bzw. AL82) mit der kanalspezifischen Kennung («L» bzw. «H») eine abwechselnde Dateneingabe vom einen bzw. anderen externen Datenbus (DB10 bzw. DB20) auf jeweils beide interne Datenbusse (DB1, DB2) erfolgt.

## Claim

1. Two-channel fail-safe microcomputer switching network, in particular for railway security systems, having microcomputers (MC1, MC2) processing the same information in two channels, the data buses (DB1, DB2) of which microcomputers are connected via two coupling circuits (EV1, EV2) to each of two external data buses (DB10, DB20), to which input signal converters (E1, E2) and output signal converters (A1, A2) are connected which are selected with the aid of adresses given via an adress bus (ADB1, ADB2) of the associated microcomputer and can be activated by means of read or write signals (IOR1, IOR2, IOW1, IOW2) given via control lines (ST11, ST12, ST21, ST22) of the respective microcomputer, the two external data buses (DB10, DB20) being activated temporally staggered during the input phases in such a manner that the input signal converters (E1, E2) present in pairs on the two external data buses only become effective after one another with respect to the same information, characterized in that there is provided in each of the two channels between the control lines (ST11, ST12 or ST21, ST22) and the converters (E1, A1 or E2, A2) a control circuit (SG1, SG2), to which and to the respective coupling circuit (EV1 or EV2) in each case there are connected a first and a second address line (AL71, AL81 or AL72, AL82) of the associated address bus (ADB1 or ADB2), in conjunction with a channel-specific identifier ("L", "H"), the control line (ST11 or ST21) carrying the read signal (IOR1 or IOR2) being additionally connected to the coupling circuit (EV1 or EV2) of the respective channel in such a manner that, per channel, the external data buses are switched off by the internal data buses (DB10/DB1; DB20/DB2) and the control circuit is switched off by the converters (SG1/E1, A1; SG2/A2) in the case of one value ("L") of the address bit ($2^7$) output via the first address line (AL71 or AL72), and in the case of the other value ("H") of this address bit ($2^7$), upon the presence of read signals (IOR1 or IOR2) by means of equivalence combination of the respective value ("L", "H") of the address bit ($2^8$) of the second address line (AL81 or AL82) with the channel-specific identifier ("L" or "H"), an alternating data input takes place from one or the other external data bus (DB10 or DB20) to in each case both internal data buses (DB1, DB2).

## Revendication

1. Dispositif de commutation à sécurité intrinsèque à micro-ordinateurs à deux canaux, notamment pour des installations de sécurité de chemins de fer, comportant deux micro-ordinateurs (MC1, MC2), qui traitent les mêmes informations dans deux canaux et dont les bus (DB1, DB2) de transmission des données sont reliés, par l'intermédiaire de deux circuits de couplage (EV1, EV2), à chacun de deux bus externes (DB10, DB20) de transmission des données, auxquels sont raccordés des convertisseurs (E1, E2) des signaux d'entrée et des convertisseurs (A1, A2) de signaux de sortie, qui peuvent être sélectionnés à l'aide d'adresses délivrées par l'intermédiaire d'un bus (ADB1, ADB2) de transmission d'adresses du micro-ordinateur associé et peuvent être activés par des signaux de lecture et d'enregistrement (IOR1, IOR2, IOW1, IOW2) délivrés par l'intermédiaire de lignes de commande (ST11, ST12, ST21, ST22) du micro-ordinateur considéré, les deux bus externes (DB10, DB20) de transmission des données étant activés, pendant la phase d'introduction, d'une manière échelonnée dans le temps de telle façon que les convertisseurs (E1, E2) de signaux d'entrée, qui sont présents par couples dans les deux bus externes de transmission des données, deviennent actifs seulement successivement, en rapport avec la même information, caractérisé par le fait que dans chacun des deux canaux il est prévu, entre les lignes de commande (ST11, ST12 ou ST21, ST22) et les convertisseurs (E1, Al ou E2, A2), un circuit de commande (ST1, ST2), que des première et seconde lignes respectives de transmission d'adresses (AL71, AL81 ou AL72, AL82) du bus associé de transmission d'adresses (ADB1 ou ADB2) sont raccordées à ce circuit de commande et au circuit de couplage concerné (EV1 ou EV2), en liaison avec un indicatif («L», «H») spécifique au canal, la ligne de commande (ST11 ou ST21), qui véhicule le signal de lecture (IOR1 ou IOR2) étant reliée en outre au circuit de couplage (EV1 ou EV2) du canal considéré de telle façon que, pour chaque canal, les bus externes de transmission des données sont déconnectés des bus internes de transmission de données (DB10/DB1; DB20/DB2) et le circuit de commande est déconnecté des convertisseurs (SG1/E1, A1; SG2/E2, A2) dans le cas où le bit d'adresse $(2^7)$ délivré par l'intermédiaire de la première ligne de transmission d'adresses (AL71 ou AL72) possède une valeur («L»), alors que, lorsque ce bit d'adresse $(2^7)$ possède l'autre valeur («H»), lors de la présence de signaux de lecture (IOR1 ou IOR2), grâce à une combinaison d'équivalence de la valeur respective («L», «S») du bit d'adresse $(2^8)$ de la seconde ligne de transmission d'adresses (AL81 ou AL82) avec l'indicatif («L» ou «H») spécifique au canal, une introduction alternée des données est effectuée depuis l'un ou l'autre des bus externes de transmission des données (DB10 ou DB20) respectivement aux deux bus internes de transmission de données (DB1, DB2).